# EUROPEAN PATENT APPLICATION

(11) **EP 4 826 931 A1**
(43) Date of publication of application: **21.10.2026**
(21) Application number: 25171494.5
(22) Date of filing: 18.04.2025
(51) Int. Cl.: H02G 1/06, B60P 3/035, B65H 75/42, H02G 11/02

(54) **CABLE MANAGEMENT VEHICLE FOR SHIP ELECTRIFICATION**

(71) Applicant: AVT Europe, 2910 Essen (BE); GTIE Synertec, 29850 Gouesnou (FR)
(72) Inventor: EL HADDOUMI, Mounia, 29850 Gouesnou (FR); STEVENS, Jan, 2920 Kalmhout (BE); PIETRICOLA, Paolo, 2950 Kapellen (BE)
(74) Representative: Regimbeau

(57) **Abstract**

The present disclosure relates to a cable management system for a ship's onshore power supply, the cable management system comprising a reel vehicle comprising a driving module and a reel with two parallel drums;
the drums being configured to wind a same cable with respectively opposite winding directions, the reel being configured:
- to unwind simultaneously a cable positioned around the two drums while rotating in one direction, and
- to wind said cable around said two drums while rotating in the opposite direction.

## Description

### FIELD OF THE INVENTION

The present disclosure concerns an electrical power supply solution. More particularly, the present disclosure concerns an onshore power supply solution for ships for medium voltage needs. The onshore power supply solution uses electrical cables and cable management systems.

### STATE OF THE ART

During their stopovers, ships and cruises can run their auxiliary engines to generate the power needed for their on-board installations. However, auxiliary engines, for cruise ship especially, are polluting.

It is therefore possible to use a shore-side electrification for the ships in harbors. This avoids, for example, the emission of 100 tonnes of CO2 and 2 tonnes of pollutants (NOX, SOX, PM2.5) for 12 hours in port. However, ships can be of different sizes, positioned at different points on the quay and subject to sea movements such as tides and waves. All these constraints make their shore-side electrification complex.

For shore-side electrification, some onshore power supply solutions already exist. An Onshore power supply (OPS) can be known as Shore Power, Shoreside Electricity (SSE), Alternative Maritime Power (AMP), High-Voltage Shore connection 11 (HSCV), or Cold Ironing.

OPS is a rapidly growing weapon in a port's arsenal to improve air quality in ports and port cities and reduce emissions of air pollutants and noise and to a lesser extent carbon dioxide, by replacing onboard-generated power from diesel auxiliary engines with electricity generated onshore. With the OPS ships can shut down their engines while berthed and plug into an onshore power source, the ship's power load is transferred to the onshore power supply without disruption to onboard services. Emissions to the local surroundings are eliminated.

These onshore power supply solutions consist of a shore connection box and a cable management system (later called CMS). The shore connection box is built with the quay. The CMS allows moving electrical cables along the quay to connect a ship to one of the connection boxes of the quay. The CMS cable can be wound on a reel so that it can be connected to the box at one end and to the ship at the other end, regardless of the distance between them, without cluttering up the quay.

The cables large diameter and length make the winding on the CMS difficult to manage. In addition, the high electrical power carried by the cable makes electrical connections within the reel difficult.

### DISCLOSURE OF THE INVENTION

An aim of the present disclosure is to solve the above-mentioned problems and to provide a simple and reliable solution of cable management system.

To this end, it is proposed, according to one aspect of the present disclosure, a cable management system for a ship's onshore power supply, the cable management system comprising a reel vehicle comprising a driving module and a reel with two parallel drums; the drums being configured to wind a same cable with respectively opposite winding directions, the reel being configured:
- to unwind simultaneously a cable positioned around the two drums while rotating in one direction, and
- to wind said cable around said two drums while rotating in the opposite direction.

This cable management system allow to manage a cable with a reel without sleep rings.

Advantageously, but optionally, the cable management system disclosed comprises at least one of the following features, taken alone or in any combination:
- the cable management system comprising a crane vehicle, independent from the reel vehicle and comprising a driving module and a crane rotatably mounted on the driving module;
- the reel vehicle comprises a reel motor configured to rotate the reel winding and unwinding a cable around the two drums;
- wherein the reel comprises an internal passage for a cable to allow a same cable to pass from one of the two drums to the other around which the cable is wound in two opposite winding directions.

According to another aspect, there is proposed an onshore power supply comprising a cable management system as previously presented, the onshore power supply comprising a cable wound around the respective two drums in two opposite winding senses to be unwound simultaneously from the two drums in respective to opposite directions.

Advantageously:
- the cable comprises a shore connection at a first end and a ship connection at a second end, the ship connection being supported by the crane;
- the crane comprises a cable motor, the cable motor being configured to move the ship connection in relation to the crane;
- respective driving module of the reel vehicle and the crane vehicle comprise a driving motor;
- the onshore power supply comprises a command unit to simultaneously control the reel vehicle, and the crane vehicle.

According to another aspect, there is proposed a method of driving the onshore power supply as previously presented, the method comprising:
- driving the driving module of the reel vehicle at a first speed,
- driving the driving module of the crane vehicle at a second speed, the second speed being twice as fast as the first speed, and
- rotating the reel so that the cable is unwound from the reel at the first speed.

According to another aspect, there is proposed a computer program product comprising program code instructions for executing the steps previously presented, when this program is executed by the command unit as previously presented.

### DESCRIPTION OF THE FIGURES

Further features, purposes and advantages will be apparent from the following description, which is purely illustrative and non-limiting, and which should be read in conjunction with the annexed drawings in which:

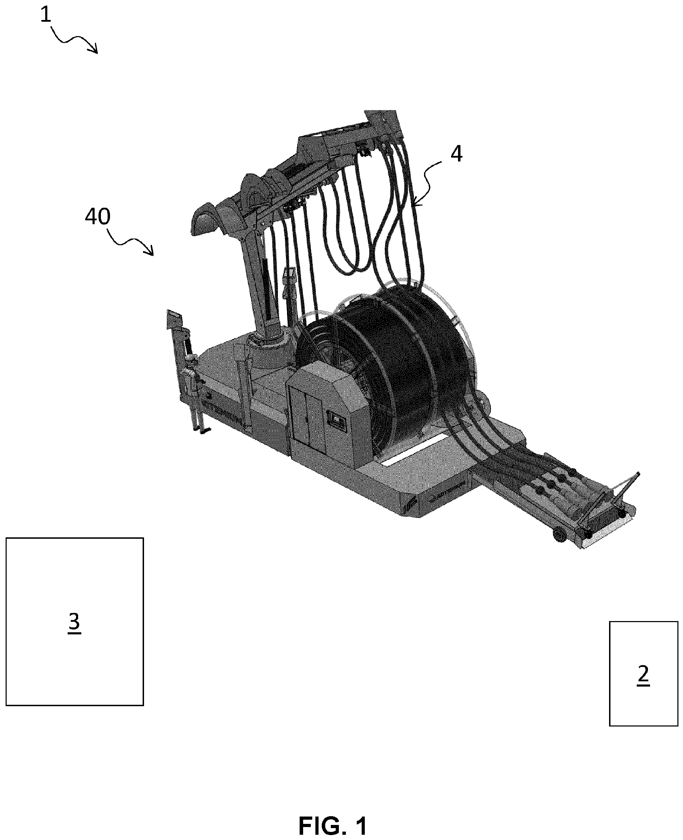

Figure 1 illustrates a cable management system according to an embodiment of the present disclosure.
Figure 1 illustrates a cable management system according to an embodiment of the present disclosure.
Figure 2 illustrates a configuration of a cable management system according to an embodiment of the present disclosure.
Figure 3 illustrates a reel vehicle of a cable management system according to an embodiment of the present disclosure.
Figure 4A illustrates a view with cables of the reel of a reel vehicle and figure 4B illustrates an exploded view without cables of the reel of a reel vehicle according to an embodiment of the present disclosure.
Figure 5 illustrates a crane vehicle of a cable management system according to an embodiment of the present disclosure.
Figure 6 is an organigram of different steps of a method for driving a cable management system according to an embodiment of the present disclosure.

Throughout the figures, similar elements bear identical references.

### DETAILED DESCRIPTION OF THE INVENTION

### Onshore power supply solution

An OPS 1 connects the ship 3 to the land-based power network, as illustrated by figure 1. The quays of the ports present various fixed connection points, called connection boxes 2, connected to this land-based power network. And the ships 3 have onboard transformers to receive power and transform it to the needs of ships 3. The needs of the ship can be of 16MVA i.e. 11kV.

To conduct, through the quays, the power needed by the ships 3, from the connection boxes 2 to the onboard transformers, the OPS 1 comprises electrical cables 4. There are, for example, four cables 4 in parallel.

Cables 4 connect the ship 3 to a connection box 2 when the ship 3 is at the quay and does not obstruct the quays the rest of the time and in the absence of a boat. To this aim, the OPS 1 comprises a cable management system 40 (CMS 40) to manage cables 4.

### Cable management system

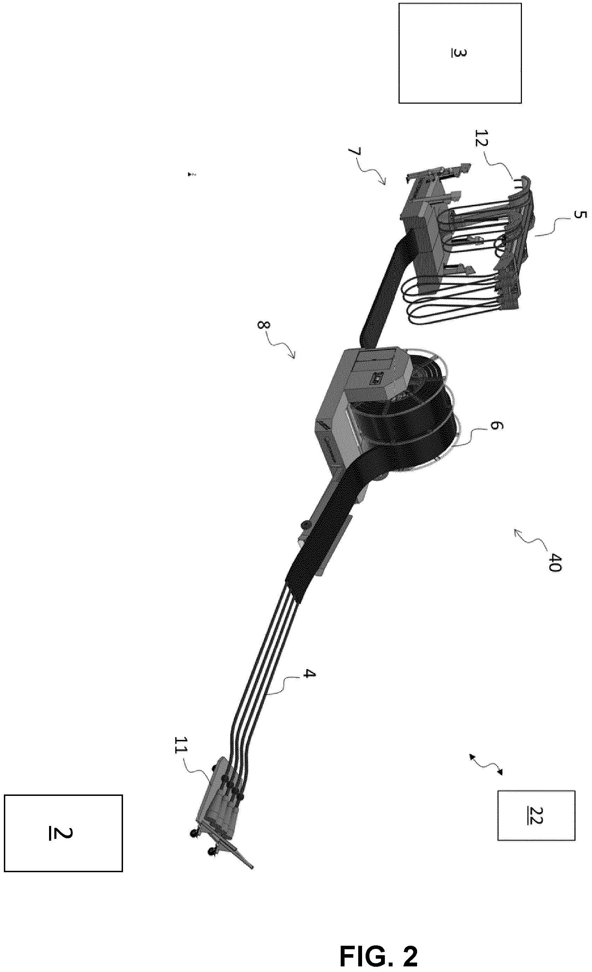

A CMS 40, as illustrated by figure 1, comprises two independent vehicles as illustrated by figure 2. A crane vehicle 7 with the crane 5 and a reel vehicle 8 with the reel 6. The reel vehicle 8 can be positioned between the connection box 2 and the crane vehicle 7 and the crane vehicle 7 can be positioned between the reel vehicle 8 and the ship 3.

The crane vehicle 7 and the reel vehicle 8 can be mechanically locked in a "Single driving mode" and virtually synchronized in a "Reel 6 tandem mode" by a command unit 22. Both vehicles have active drive wheels, independent battery/charger, electrical cabinets, control panels, rescue panels, independent machines with Bluetooth communication to allow synchronization and with two remote control receivers that are coupled to one or more radio transmitters.

CMS 40 provides high flexibility to fit the specific challenges faced by the different sizes of ships 3, the position of the access to their onboard transformer and the configurations of the different quays etc...

A CMS 40 allows the ship 3 to connect directly and autonomously to the land-based power network and ensures that the quay does not become obstructed when there is no ship 3.

Moreover, such a CMS 40, with two independents vehicle, allows a smart and simple management of the cable 4 as described above and limits the effort in the cable 4 by dividing them as described above.

### Reel vehicle

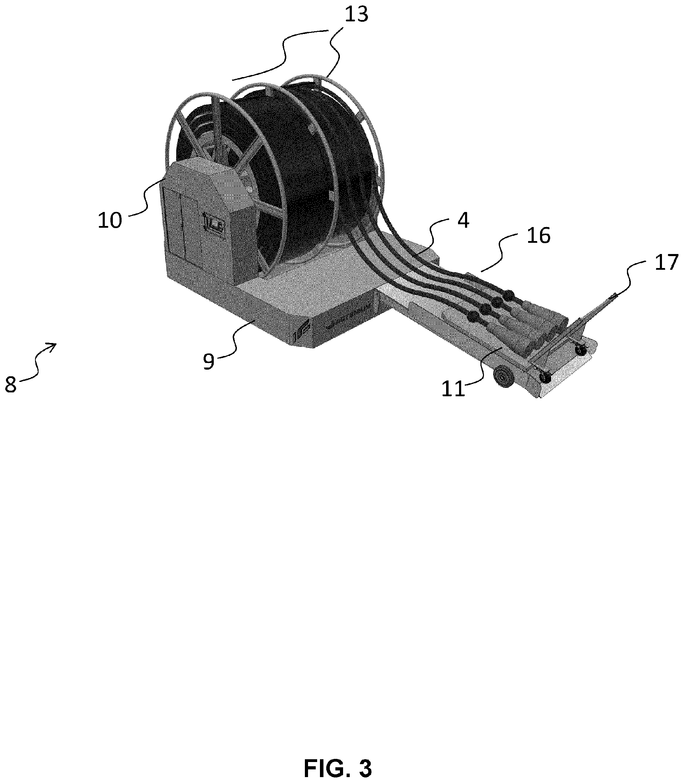

The reel vehicle 8 mainly manages the cable 4 along the quay. As illustrated by figure 3, the reel vehicle 8 comprises a driving module 9 and a reel 6 to wind the cable(s) around.

The driving module 9 of the reel vehicle 8 is autonomous and allows the reel vehicle 8 to drive on the quays thanks to a driving motor. The driving module 9 allows the reel vehicle 8 to move forward, backward, stop and turn as needed. To this end, the driving module 9 can comprise different wheels of various types and sizes.

The reel vehicle 8 can also comprise a reel motor 10 configured to rotate the reel 6. The reel motor 10 can be distinct from the driving module 9 or the same engine.

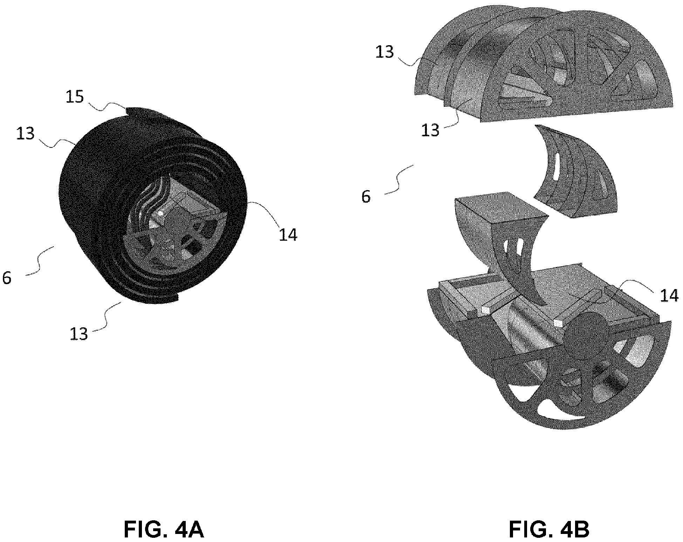

As illustrated by figures 4A and 4B, the reel 6 comprises two parallel drums 13 having respectively opposite winding directions and an internal passage 14 for the cable 4. This allows the same cable 4 to pass from one of the two drums 13 to the other of the two drums 13 around which the cable 4 is respectively wound in two opposite winding directions. The cable 4 comprises a shore connection 11 at a first end and a ship connection 12 at a second end. The ship connection 12 is configured to be supported by the crane 5 and the ship connection 12 to be connected to the box connection 2. The cable 4 between the shore connection 11 and the ship connection 12 is managed by the reel 6.

The same cable 4 (or a plurality of cables 4 in parallel) is therefore configured to be wound around the respective two drums 13 in two opposite winding directions so as to be simultaneously wound/unwound from the two drums 13 in respective to opposite directions of extension when the reel 6 is rotated. In other words, by comprising two opposite drums 13 with respective opposite winding directions, the reel 6 is configured:
- by rotating in a first rotating direction, to simultaneously unwind the same cable 4, positioned around the two drums 13, in two opposite directions, thus towards the ship 3 and towards the box connection 2 at the opposite to the ship from the reel vehicle 8;
- by rotating in a second rotating direction, opposite to the first rotating direction, to simultaneously wind the same cable 4, around the two drums 13, in respective two opposite directions, thus from the ship 3 and from the box connection 2.

Thus, a simple and single cable 4 being wound around the two drums 13 of the reel 6 can allow the CMS 40 to connect the ship 3 to the box connection 2 without slip rings, usually needed to connect to a cable 4 wound around a drum. The use of a reel 6 with two drums 13 and the winding of the same cable 4 on these two respective drums 13 allows the CMS 40 to unroll an electrical cable 4 (with a medium and large voltage) without using complex electrical connections as slip rings.

More conveniently, the cable 4 can be rolled halfway onto one of the drums 13 to be unrolled towards the box connection 2 and the other halfway onto the other one drums 13 to be unrolled towards the crane vehicle 7, i.e. the ship 3. The middle of the cable 4 is therefore between the two drums 13 into the internal passage 14 of the reel 6.

Such a reel 6 with two opposite drums 13 allows to limit the risks related to medium voltage (due to the absence of slip rings), reduce the maintenance (no slip rings and easier access to components), improve maneuverability (wheel configuration allows turning on spot in 9m diameter), be operator friendly (allowing only one operator to manage the CMS 40).

The reel 6 can have, for example, 30m of cable 4 rolled on the respective two parallel drums 13. The length can be longer depending on the needs of each port.

As suggested before, the CMS 40 can comprise a plurality of cables 4 in parallel. In other words, everything described for a single cable 4 wound around the two drums 13 of the reel 6 also applies to several independent cables 4 wound in parallel around the drums 13 of the reel 6.

The reel 6 of the reel vehicle 8 allows the cable 4 to wind and unwind the cable 4 very easily and therefore to very easily store the cable 4. The reel 6 uses only the length of cable 4 needed for each specific requirement by unrolling only this length.

The reel vehicle 8 can also comprise an E-chain 15 to keep the cables 4 together and that prevents the cables 4 sliding on the ground from the reel 6. The E-chain 15 has integrated wheels that prevent the chain from sliding and help crossing obstacles like small gaps/steps, preventing damage to the chain itself and to the cables 4. All safety devices necessary to detect under/over-tension, alignment, to guide and avoid damage to the E-chain 15 are not shown.

On the rear (i.e. opposite to the side of the crane vehicle 7), the reel vehicle 8 has a tilting frame 16. The tilting frame 16 can stabilize the parasite side movements due to swiveling effect, the two wheels reducing the degrees of movement of this mover when it is necessary to drive straight.

The reel vehicle 8 can comprise a small carrier 17 with wheels to allow the operator to easily guide the shore connection 11 near the connection box 2. The small carrier 17 avoids damage to the connector during the cable 4 extension phase. The small carrier 17 can be held by the tilting frame 16 when the cable 4 is wound and the shore connection 11 on the reel 6. The small carrier 17 can comprise wheels and brakes to be able to keep this part steady on the ground during an unwinding phase.

### Crane vehicle

The crane vehicle 7 mainly manages the cable 4 at the extremity of the cable 4 to bring the cable 4 from the quay to the ship 3.

The crane vehicle 7 is independent from the reel vehicle 8 and can therefore move on its own. The crane vehicle 7 can be linked to the reel vehicle 8 by the cable 4. When the ship connection 12 of the cable 4 is on the crane 5, the crane vehicle 7 can move away from the reel vehicle 8 when the cable 4 is unwound from the reel 6.

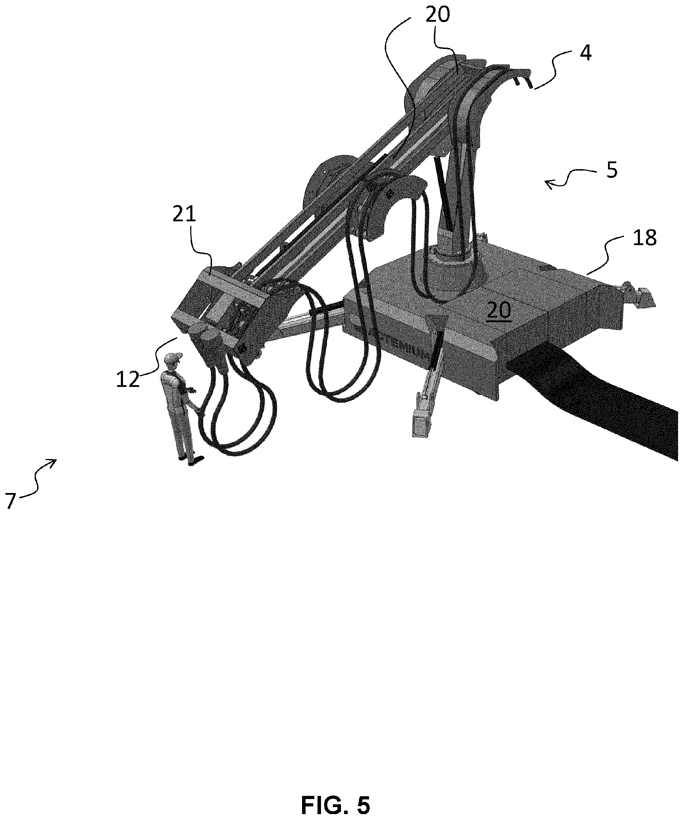

As illustrated by figure 5, the crane vehicle 7 comprises a driving module 18 and a crane 5 rotatably mounted on the driving module 18.

The driving module 18 allows the crane vehicle 7 to move forward, backward, stop and turn as needed thanks to a driving motor. To this end, the driving module 18 can comprise different wheels of various types and sizes. The driving module 18 can have permanently on the ground one dual rotary drive and two pivoting assembly with rubber swivel wheels (to avoid damage to the surface). There is also one retractable guide wheel, needed when this vehicle is used alone, serving as pivoting center. When this mover is mechanically connected to the reel vehicle, this wheel is automatically retracted because the pivot point of the assembly is moved on the reel vehicle 6).

The crane vehicle 7 can also comprise a crane motor 19 configured to rotate the crane 5. The crane motor 19 can be distinct from the driving module 18 or the same engine.

The crane 5 can usually comprise different arms 20 articulated together to bring the ship connection 12 into a large panel of position in the scope of the crane 5. For example, the crane 5 can move the ship connection 12 up to 10 meters from the crane vehicle 7 to connect it to the ship.

The crane 5 can comprise a cable feeder 21. The cable feeder 21 is configured to move the ship connection 12 in relation to the crane 5. The cable feeder 21 can be positioned on the crane 5. The cable feeder 21 can comprise a motor and dual pivoting system to lift and brake or provide grip to the cable 4. The cable feeder 21 can comprise a driven pulley that can be controlled as direct output from a gearbox or indirectly with chains/sprocket. Moreover, the crane can comprise a plurality of cable feeders 21 on different positions on the different arms 20.

Electrical and hydraulic items are kept as far as possible from the floor and are accessible from the top via easy dismountable covers.

### Command unit

The command unit 22 is configured to simultaneously control the respective driving modules 9,18 of the reel vehicle 8 and the crane vehicle 7. Moreover, the command unit 22 controls the reel 6 to unwind the cable 4 when the reel vehicle 8 and crane vehicle 7 move. The command unit 22 can also command the crane 5 to move the ship connection 12 of the cable 4.

Multiple remote controls are possible. With a remote-control mode, it is possible to control only the reel vehicle 8 or only the crane vehicle 7, or both together with the same speed if they are fixed for example, or both together with different speeds.

The command unit 22 is configured to command the CMS 40 by executing a computer program product comprising program code instructions. The program code instructions is for executing the steps of the method.

### Driving method

The CMS 40 can be driven by the command unit 22 to connect the ship 3 to a connexion box 2, for example the nearest connection box 2.

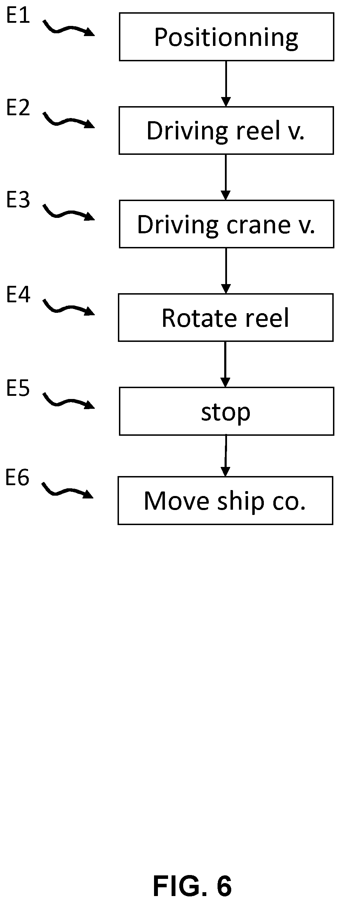

As illustrated by figure 6, during a positioning step E1, the CMS 40 can be driven at a common speed for the two vehicles. Indeed, the reel vehicle 8 and the crane vehicle 7 can be hitched together to access the quay.

When the CMS 40 is at the quay, the reel vehicle 8 and the crane vehicle 7 can be unhitched and the shore connection 11 is fixed to the box connection or positioned near it.

Then the command unit 22 can drive E2 the driving module 9 of the reel vehicle 8 at a first speed and drive E3 the driving module 18 of the crane vehicle 7 at a second speed, the second speed being twice as fast as the first speed. During this step, the command unit 22 also commands the reel 6 to rotate E4 so that the cable 4 is unwound from the reel 6. Thus, the shore connection 11 does not move, the reel vehicle 8 unwinds the cable 4 between itself and the connection box 2 and allows the crane vehicle 7 to move away. The cable 4 is unwound from the reel 6 in the two opposite directions at the first speed.

The first speed can be around 30 or 60 m/min.

When the crane vehicle 7 is at the predetermined position, the command unit 22 can stop E5 the respective driving modules 9,18 of the crane vehicle 7 and the reel vehicle 8 and the unwinding of the cable 4.

The crane 5 can move E6 the ship connection 12 of the cable 4 into the ship 3.

## Claims

1. Cable management system (40) for a ship's onshore power supply (1), the cable management system (40) comprising a reel vehicle (8) comprising a driving module (9) and a reel (6) with two parallel drums (13);
the drums (13) being configured to wind a same cable (4) with respectively opposite winding directions, the reel (6) being configured:
- to unwind simultaneously a cable (4) positioned around the two drums (13) while rotating in one direction, and
- to wind said cable (4) around said two drums (13) while rotating in the opposite direction.

2. Cable management system (40) according to claim 1, comprising a crane vehicle (7), independent from the reel vehicle (8) and comprising a driving module (18) and a crane (5) rotatably mounted on the driving module (9).

3. Cable management system (40) according to anyone of claims 1 and 2, wherein the reel vehicle (8) comprises a reel motor (10) configured to rotate the reel (6) winding and unwinding a cable (4) around the two drums (13).

4. Cable management system (40) according to anyone of claims 1 to 3, wherein the reel (6) comprises an internal passage (14) for a cable (4) to allow a same cable (4) to pass from one of the two drums (13) to the other around which the cable (4) is wound in two opposite winding directions.

5. Onshore power supply (1) comprising a cable management system (40) according to anyone of claims 1 to 4, the onshore power supply (1) comprising a cable (4) wound around the respective two drums (13) in two opposite winding senses to be unwound simultaneously from the two drums (13) in respective to opposite directions.

6. Onshore power supply (1) according to claim 5, wherein the cable (4) comprises a shore connection (11) at a first end and a ship connection (12) at a second end, the ship connection (12) being supported by the crane (5).

7. Onshore power supply (1) according to claim 6, in which the crane (5) comprises a cable motor (21), the cable motor (21) being configured to move the ship connection (12) in relation to the crane (5).

8. Onshore power supply (1) according to anyone of claims 5 to 7, in which respective driving module (9) of the reel vehicle (8) and the crane vehicle (7) comprise a driving motor.

9. Onshore power supply (1) according to anyone of claims 1 to 8, comprising a command unit (22) to simultaneously control the reel vehicle (8) and the crane vehicle (7).

10. Method of driving the onshore power supply (1) according to anyone of claims 5 to 9, the method comprising:
- driving the driving module (9) of the reel vehicle (8) at a first speed,
- driving the driving module (9) of the crane vehicle (7) at a second speed, the second speed being twice as fast as the first speed, and
- rotating the reel (6) so that the cable (4) is unwound from the reel (6) at the first speed.

11. A computer program product comprising program code instructions for executing the steps of the method of claim 10, when this program is executed by the command unit (22) according to claim 9.
